# EUROPÄISCHE PATENTSCHRIFT

(11) **EP 1 839 983 B1**
(45) Veröffentlichungstag und Bekanntmachung des Hinweises auf die Patenterteilung: **16.03.2016**
(21) Anmeldenummer: 06405286.3
(22) Anmeldetag: 06.07.2006
(51) Int. Cl.: B60T 8/52, F16D 66/00

(54) **Vorrichtung zur Messung der Bremskraft eines Bremssystems eines Flugzeugs.**
Apparatus for measuring the braking force in an aircraft brake assembly
Dispositif pour mesurer la force de freinage dans le frein d'un avion

(30) Priorität: 29.03.2006 CH 4992006
(43) Veröffentlichungstag der Anmeldung: 03.10.2007
(73) Patentinhaber: Meggitt SA, 1752 Villars-sur-Glâne (FR)
(72) Erfinder: Perriard, Jacques, 1680 Romont (CH); Schmid, Felix, 1782 Belfaux (CH)
(74) Vertreter: AMMANN PATENTANWÄLTE AG BERN

(56) Entgegenhaltungen:
- WO-A-02/064990
- DE-A1- 19 800 422
- US-A- 4 474 060
- US-A- 6 050 126

## Beschreibung

Die vorliegende Erfindung bezieht sich auf eine Vorrichtung zur Messung der Bremskraft in einem Fahrzeugfahrwerk gemäss Oberbegriff des Anspruchs 1. Des Weiteren bezieht sie sich auf einen Sensor für eine derartige Vorrichtung.

Die Bremsen von Flugzeugen bestehen aus ineinander verschachtelten Stapeln von Bremsscheiben, die durch hydraulische oder elektrische Aktuatoren aufeinandergepresst werden. Der eine der Stapel ist mit dem jeweiligen Rad verbunden. Der andere Stapel ist zur Aufnahme der Bremskraft mit dem stationären Teil des Fahrwerks verbunden. Für die Übertragung der Bremskraft, d. h. des Drehmoments, das bei Aktivierung der Bremsen auftritt, auf das Fahrwerk ist der zweitgenannte, stationäre Stapel auf geeignete Art gegen Drehung gegenüber dem Fahrwerk arretiert. In der Regel handelt es sich dabei um eine exzentrisch zur Achse des Rades am stationären Stapel angeordnete Befestigungsvorrichtung, im einfachsten Fall eine Bohrung. Ein Bolzen dient dazu, den stationären Stapel mit dem Fahrwerk direkt oder über eine Bremskraftübertragungsstange zu verbinden. Dieser Bolzen wird durch das Drehmoment in Querrichtung hoch belastet und ist daher aus einem hochfesten Material gefertigt. Da er in der Regel einen relativ grossen Durchmesser aufweist, ist er jedoch aus Gewichtsersparnisgründen hohl ausgeführt.

Aus verschiedenen Gründen ist es wünschenswert, die aktuelle Bremswirkung zu messen. Die US-4,474,060 schlägt dazu vor, die Büchse, die normalerweise zwischen dem erwähnten Bolzen und der jeweiligen Aufnahmeöffnung angeordnet ist, als Kraftsensor auszubilden. Diese Lösung hat jedoch den Nachteil, dass damit eine Änderung in den Elementen vorgenommen wird, die der Kraftübertragung dienen, weswegen der Aufwand für die Zertifizierung dieser Lösung erheblich ist. Die Zertifizierung erfordert einen relativ grossen Zeit- und Kostenaufwand und ist darüber hinaus im Extremfall für jeden Flugzeugtyp einzeln durchzuführen.

Ähnliche Probleme der Messung der Bremskraft können sich auch bei anderen Fahrzeugarten ergeben, die Bremssysteme ähnlich zu denjenigen von Flugzeugen aufweisen.

Die US-A-6,050,126 offenbart eine Vorrichtung für die Bremskraftmessung an Radaufhängungen für Antiblockiersysteme, wobei die benötigten Bremsparameter aus Dehnungsmessstreifen abgeleitet werden, die an einer gezeigten Radaufhängung befestigt werden. Hierzu wird ein Loch in die Radaufhängung gebohrt, wobei unklar bleibt, an welcher Aussenposition dieses Loch anzubringen ist. Die Dehnmessstreifen sind auf einem quaderförmigen Substrat aufgebracht, welches in den zentralen Innenraum des Lochs eingebracht wird. Die vorgeschlagene Aufrüstung zur Bremskraftmessung erfordert also neben der Aufbringung der Messmittel auf ein Substrat noch die Bohrung eines Lochs in der Radaufhängung.

Die WO-A-02/064990 betrifft einen Bremsaktuator, insbesondere für Schienenfahrzeuge. Für die Messung der Kraft, mit der die Bremse betätigt wird (und nicht diejenige, die auf das Fahrwerk übertragen wird), ist ein Bolzen, auf den das Bremsdrehmoment transversal einwirkt, umfänglich mit Dehnungsmessstreifen in umlaufenden Nuten versehen. Dies erfordert jedoch, dass die Dehnungsmessstreifen von aussen in den Kraftfluss miteingebunden werden müssen.

Eine Aufgabe der vorliegenden Erfindung besteht daher darin, eine Vorrichtung zur Messung der Bremskraft an einem Fahrzeugfahrwerk anzugeben, die anbringbar ist, ohne wesentliche Eingriffe in den Übertragungsweg der Bremskraft vornehmen zu müssen.

Eine derartige Vorrichtung ist im Anspruch 1 angegeben. Die weiteren Ansprüche geben bevorzugte Ausführungsformen und Sensoren zur Verwendung in der Vorrichtung an.

Demgemäss besteht das Prinzip der Erfindung darin, einen Bolzen, der der Übertragung der Bremskraft dient, mit Mitteln auszustatten, die seine Verformung messen. Grundlage der Einrichtung ist die Beobachtung, dass der Bolzen unter den grossen auftretenden Kräften in einem Mass verformt wird, das eine Messung ermöglicht. Die Messeinrichtung kann dabei im Innern des hohlen Bolzens angeordnet werden. Eine Möglichkeit ist die direkte Anbringung auf der Oberfläche des Bolzens, z. B. in Form von Dehnungsmessstreifen.

Eine andere Möglichkeit besteht in einer indirekten Kopplung. Dazu wird in den Bolzen ein Sensor eingeschoben, der auf geeignete Art derart eng an das Innere des Bolzens anliegt, dass er bei der Verformung des Bolzens während der Bremsung ebenfalls verformt wird. Der Sensor ist in seinem Inneren mit Dehnungsmessstreifen oder ähnlichem ausgestattet, um die auftretenden Spannungen und/oder Verformungen zu erfassen. Zusätzlich kann in beiden Fällen noch eine Auswertungselektronik angebracht sein, um eine Vorverarbeitung der Messsignale vor Ort zu ermöglichen.

Die Erfindung soll weiter an bevorzugten Ausführungsbeispielen unter Bezugnahme auf Figuren erläutert werden.
Fig. 1 schematische Darstellung eines Flugzeugfahrwerkgestells ("bogie");
Fig. 2 Längsschnitt durch einen Bolzen mit einer ersten Ausführungsform der Messeinrichtung;
Fig. 3 Längsschnitt analog Fig. 2 mit einer zweiten Ausführungsform der Erfindung;
Fig. 4 Querschnitt gemäss IV-IV in Fig. 3 im unbelasteten Zustand; und
Fig. 5 Querschnitt wie Fig. 4 im belasteten Zustand.

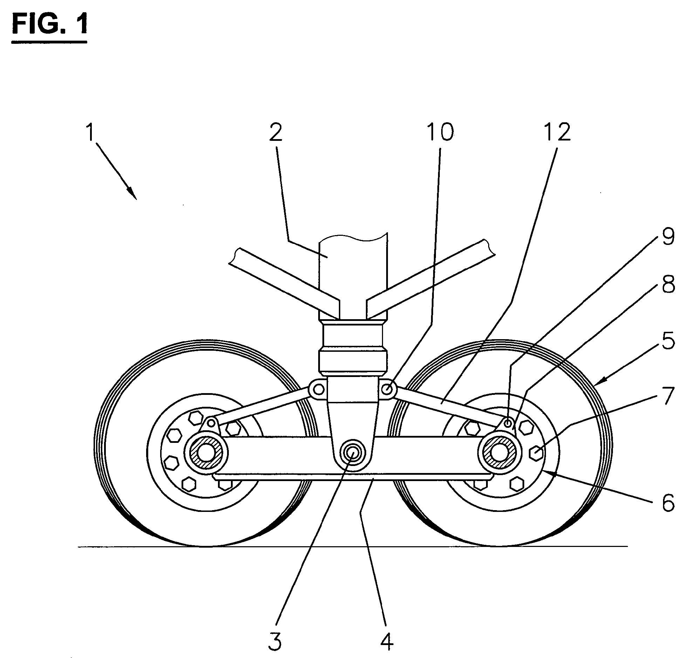

Fig. 1 zeigt den grundsätzlichen Aufbau eines Flugzeugfahrwerks 1. An einem Fahrwerkbein 2 ist in einem Gelenk 3 ein Fahrwerkträger 4 ("bogie train") angebracht. Am Fahrwerksträger befinden sich die Räder 5. An den Rädern 5 sind die Bremsen 6 angebracht, die durch (z. B. hydraulische) Aktuatoren 7 betätigt werden können. Am stationären Scheibenstapel der Bremse 6 ist ein Hebel 8 mit einer Bohrung 9 vorhanden. An der Bohrung 9 wie auch an einem Befestigungspunkt 10 ist die Kraftübertragungsstange 12 befestigt, die während des Bremsvorganges das Bremsdrehmoment von der Bremse 7 auf das Fahrwerk 1 überträgt.

Die dargestellte, grundsätzliche Konstruktion eines Flugzeugfahrwerks entspricht dem Stand der Technik für grössere Flugzeuge. Alternativ zur Verwendung der Kraftübertragungsstange 12, insbesondere bei kleineren Flugzeugen, ist es auch gängig, das Drehmoment direkt von der Bremse auf das Fahrwerk zu übertragen, z. B. über eine direkte Bolzenverbindung.

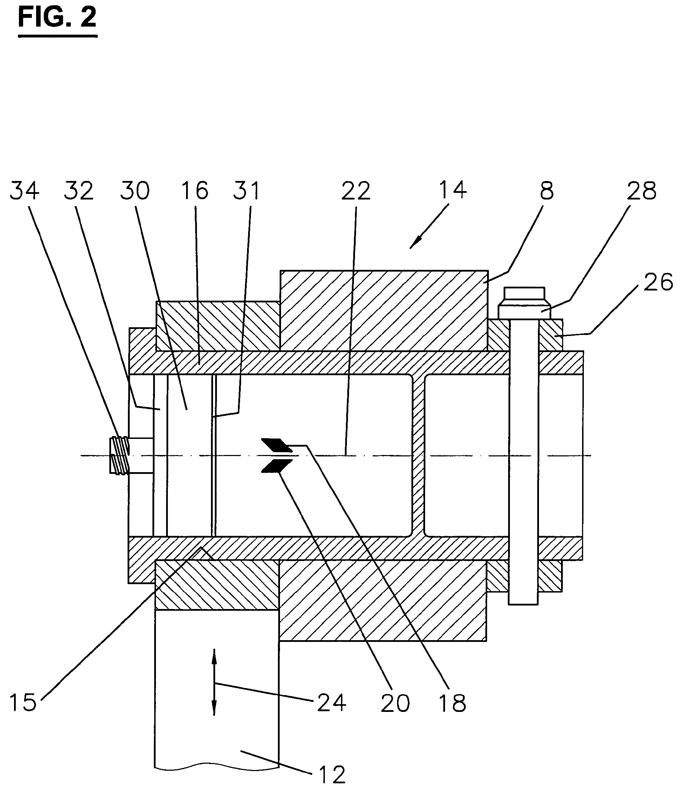

Fig. 2 zeigt im Längsschnitt einen Schnitt durch die Verbindung der Bremskraftübertragungsstange 12 mit dem stationären Teil 14 der Bremse 6, wobei der oben erwähnte Hebel 8 als Teil des stationären Teils 14 aufgefasst wird.

Durch die Bohrung 9 im Hebel 8 sowie durch eine Bohrung 15 am Ende der Bremskraftübertragungsstange 12 verläuft der Bolzen 16. Der Bolzen 16 ist aus einem hochfesten Material hergestellt und zur Gewichtsersparung weitgehend hohl. Bei einer Bremsung wird er jedoch trotzdem merklich verformt. Beobachtet wurden z. B. ⁴/₁₀ mm Verformung bei einem Bolzen von 50 mm Innendurchmesser.

Zur Messung dieser Verformung sind an der Innenwand des Bolzens 16 Dehnungsmessstreifen 18, 20 angebracht. Die Dehnungsmesstreifen 18, 20 sind dabei so ausgerichtet, dass ihre Messrichtungen in einem Winkel von ca. 45° zur Längsachse 22 des Bolzens 16 stehen. Sie sind darüber hinaus auch symmetrisch zur Ebene angeordnet, die parallel zur Achse 22 und senkrecht zur Bremskraft (Pfeil 24) verläuft. Durch diese Anordnung ist es möglich, die Scherspannung zu messen. Gleichzeitig erlaubt es diese Anordnung, die durch die Bremskräfte hervorgerufene Verformung des Bolzens 16 von anderen Ursachen zu trennen wie Vibrationen, Stösse.

Im Fall der Verwendung von zwei Dehnungsmessstreifen können diese Teil einer Halbbrückenanordnung bilden. Vorzugsweise wird jedoch ein zweites Paar (nicht dargestellt) gegenüber dem Messstreifenpaar 18, 20 angebracht, um eine Vollmessbrücke zu bilden. Je nachdem ist dabei eine antiparallele Beschaltung oder eine umgekehrte Anordnung (gespiegelt an Ebene senkrecht zur Längsachse 22) vorzusehen. Durch die räumliche Nähe der Dehnungsmessstreifen 18, 20 ist es möglich, diese bereits als Einheit mit der korrekten Ausrichtung der Messrichtung zueinander zu produzieren. Geeignete Schaltungen sind an sich bekannt.

Für die Funktion der Messanordnung ist es wichtig, dass sich die Dehnungsmessstreifen in der korrekten Position relativ zur Wirkung der Bremskraft 24 befinden. Dazu kann am stationären Teil 14 ein Ring 26 angebracht sein. Durch diesen Ring 26 und den Bolzen 16 ist ein Stift 28 hindurchgesteckt und auf geeignete Art und Weise gesichert, wodurch der Bolzen 16 gegenüber einer Drehung fixiert ist.

In der Ausnehmung 30 im Bolzen 16, in der sich auch die Dehnungsmessstreifen 18, 20 befinden, ist auf einer eingesetzten Leiterplatte 31 eine Schaltung für die Ansteuerung der Dehnungsmessstreifen 18, 20 und die Auswertung ihrer Signale vorhanden. Die Ausnehmung 30 ist durch eine Scheibe 32 verschlossen, um die Platine 31 und die Messstreifen 18,20 vor Umwelteinflüssen zu schützen. In ihrer Mitte befindet sich ein elektrischer Anschluss 34, hier mit Gewindesicherung, an dem die Stromversorgungs- und Signalleitungen für die Messeinrichtung angeschlossen werden.

Insgesamt kann diese Messvorrichtung damit am Bolzen 16 angebracht werden, ohne dass dadurch eine Neuzertifizierung dieses für die Sicherheit wichtigen Teiles nötig würde. Durch die Verwendung von Dehnungsmessstreifen, die für die Messung der Scherspannung ausgelegt sind und daher paarweise in der nötigen Konfiguration vorgefertigt werden können, ist die Ausstattung eines Bolzens 16 mit diesen Dehnungsmessstreifen unter Einhaltung der korrekten Orientierung zueinander und zum Bolzen 16 vereinfacht. Ausserdem können zwei Paare von Dehnungsmessstreifen eingesetzt werden, die eine Messvollbrücke bilden.

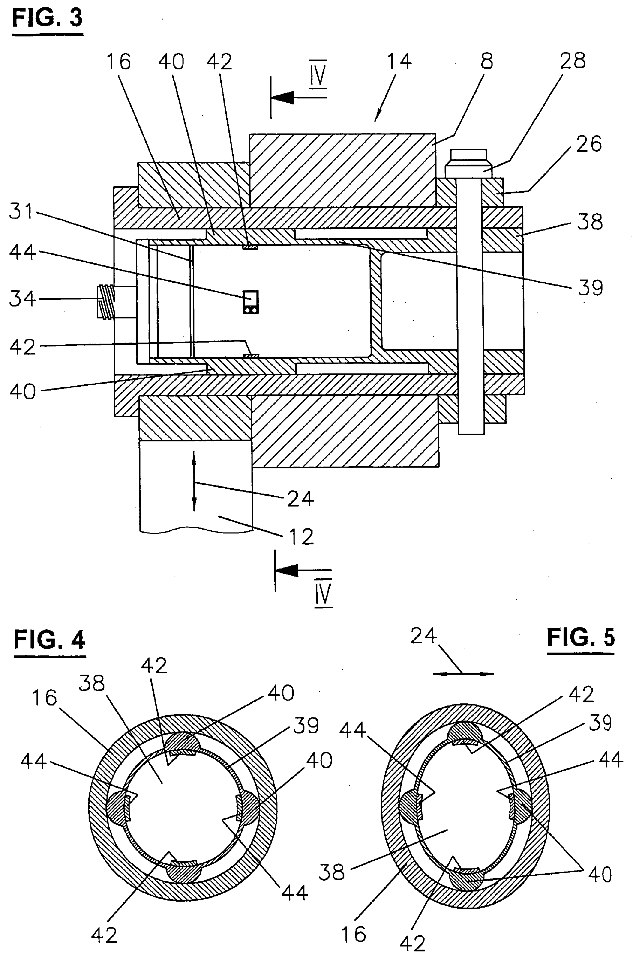

Eine andere Anbringung der Messeinrichtung zeigt die Ausführung gemäss Fig. 3. Die mit Fig. 2 übereinstimmenden Teile tragen dieselben Bezugszeichen und haben die gleiche Funktion, wie Bremskraftübertragungsstange 12, stationärer Teil der Bremse 14 und Orientierungsmittel für die Messeinrichtung mit Ring 26 und Stift 28. Bei dieser Ausführung wird in den Bolzen 16 ein Sensor 38 eingeschoben, dessen Gehäuse 39 an den Innendurchmesser des Bolzens 16 angepasst und leicht eingepresst ist, so dass es zusammen mit dem Bolzen 16 verformt wird. In der vorliegenden Ausführung ist das Gehäuse mit vier Erhebungen 40 ausgestattet (siehe Fig. 4, 5). Die Erhebungen sind im Querschnitt abgerundet und gleichmässig über den Umfang des Sensorgehäuses 39 verteilt, d. h. in einem Winkel von 90° zueinander. Bevorzugt wird dabei der Sensor 38 so im Bolzen 16 angeordnet, dass die Verbindungslinien zwischen gegenüberliegenden Erhebungen 40 parallel oder senkrecht zur Bremskraft 24 ausgerichtet sind, um eine optimale Übertragung der Verformung auf das Sensorgehäuse 39 zu erhalten.

Wie in Fig. 3 zu sehen, erstrecken sich die Erhebungen 40 nur über einen Teil der Gesamtlänge des Sensors 38. Insbesondere sind sie dort vorgesehen, wo sich der Übergang zwischen stationärem Bremsenteil 14 und Kraftübertragungsstange 12 befindet. Zur Abstützung befinden sich weitere derartige Erhebungen am Gehäuseende und werden vom Orientierungsstift 28 durchsetzt.

Das Gehäuse 39 des Sensors 38 muss eine hinreichende Biegsamkeit aufweisen, um der Deformierung des Bolzens 16 folgen zu können. Aus dem gleichen Grund müssen die Erhebungen 40 relativ zum Gesamtgehäuse 39 eine hinreichende Steifigkeit aufweisen, um diese Deformierung möglichst vollständig auf das Gehäuse 39 zu übertragen.

Im Inneren des Gehäuses befinden sich Dehnungsmessmittel 42, 44, insbesondere Dehnungsmessstreifen. Die Dehnungsmessstreifen 42, 44 sind dabei so ausgerichtet, dass sie für eine angulare Dehnung oder Stauchung der Oberfläche empfindlich sind, also eine Deformierung parallel zum Umfang in der Ebene senkrecht zur Längsrichtung 22 des Bolzens 16. Diese Ausrichtung basiert auf der Beobachtung, dass der Bolzen 16 sowohl einer axialen Dehnung oder Stauchung als auch einer Ovalisierung unterworfen ist, d. h. während des Bremsens verformt sich der Querschnitt des Bolzens 16, der unbelastet im Normalfall kreisförmig ist, zu einem Oval.

Zur besseren Erfassung dieser Ovalisierung sind gleichmässig um den Umfang verteilt vier Anordnungen von Dehnungsmessstreifen 42, 44 angebracht.

Im Sensor befindet sich wiederum eine Platine 31 mit einer Konditionierungsschaltung, und am einen Sensorende befindet sich eine Steckverbindung 34 für den elektrischen Anschluss des Sensors.

Aus der vorangehenden Beschreibung sind dem Fachmann zahlreiche Abwandlungen zugänglich, ohne den Schutzbereich der Erfindung zu verlassen, der durch die Ansprüche definiert ist. Denkbar ist insbesondere:
- Verwendung anderer Dehnungsmesselemente als Dehnungsmessstreifen;
- Eine andere Fixierungseinrichtung als Stift 28 und Ring 26 zur Festlegung der Orientierung der Messelemente relativ zur Bremskraft 24;
- Verwendung einer grösseren Anzahl Messelemente, gegebenenfalls unter Verzicht einer Orientierungsvorrichtung (Ring 26, Stift 28) und einer entsprechenden Auswertung der Signale, um eine Messung in beliebiger Winkelorientierung der Messanordnung zur Drehkraft 24 zu erhalten.
- Eine Bremskraftmessvorrichtung (Dehnungsmesstreifen 18, 20; Sensor 38) ist zusätzlich oder alternativ an anderer Stelle angebracht, wo ein geeignetes, transversal durch die Bremskraft bzw. das entsprechende Drehmoment belastetes Verbindungselement vorhanden ist, z. B. am Befestigungspunkt 10 oder im Bolzen, der bei Fahrwerken ohne Übertragungsstange 12 den stationären Bremsenteil am Fahrwerk verankert.
- Die direkt am Bolzen 16 angebrachten Messmittel messen direkt die Dehnung bzw. Kompression, d.h. sind z. B. gegenüberliegend in Kraftrichtung 24 angeordnet.
- In den Bolzen oder im Sensor 38 ist ein Träger (Scheibe, Steganordnungen) angeordnet, auf dem sich die Messmittel befinden. Die Messmittel liefern ein Signal in Abhängigkeit von der Deformierung des Trägers.

## Patentansprüche

1. Vorrichtung zur Messung der Bremskraft in einem Fahrzeugfahrwerk (1), in dem die Bremskraft über ein stabförmiges Teil (16) auf das Fahrwerk des Fahrzeugs übertragen wird, wobei das stabförmige Teil durch die Bremskraft transversal belastet wird und Messmittel (18, 20; 40, 42) in mechanischer Wirkverbindung mit dem stabförmigen Teil vorhanden sind, mit welchen Messmitteln die Dehnung oder Kontraktion des stabförmigen Teils messbar ist, die durch die transversale Belastung verursacht wird, **dadurch gekennzeichnet, dass** sich die Messmittel (18, 20; 40, 42) in einem Gehäuse (39) eines Sensors (38) befinden, der sich in einen Hohlraum des stabförmigen Teils (16) erstreckt, wobei wenigstens ein Teil des Gehäuses mechanisch in Wirkverbindung mit dem stabförmigen Teil (16) und die Messmittel in mechanischer Wirkverbindung mit diesem Teil des Gehäuses stehen, so dass eine Verformung des stabförmigen Teils über den Teil des Gehäuses auf die Messmittel übertragbar ist, wobei das Gehäuse (39) eine hinreichende Biegsamkeit aufweist, um der Verformung des stabförmigen Teils (16) folgen zu können.

2. Vorrichtung gemäss Anspruch 1, **dadurch gekennzeichnet, dass** das stabförmige Teil (16) ein hohler Bolzen ist, der eine Kraftaufnahmestange (12), die der Übertragung der Bremskraft von der Bremse (6) auf das Fahrwerk (1) dient, mit dem Fahrwerk des Fahrzeugs verbindet oder dem stationären Teil (14) der Bremseinrichtung verbindet.

3. Vorrichtung gemäss Anspruch 1 oder 2, **dadurch gekennzeichnet, dass** die Messmittel (18, 20) paarweise angeordnet sind, wobei die beiden Teile eines Paars derart angeordnet sind, dass sie gegenläufig orientierte Veränderungen der Oberfläche messen.

4. Vorrichtung gemäss einem der Ansprüche 1 bis 3, **dadurch gekennzeichnet, dass** die Messmittel (18, 20; 40, 42) zur Erfassung einer Ovalisierung des stabförmigen Teils (16) ausgebildet sind.

5. Vorrichtung gemäss einem der Ansprüche 1 bis 4, **dadurch gekennzeichnet, dass** die Messmittel (18, 20; 40, 42) so angeordnet sind, dass sie bei Änderung der Krümmung des Gehäuses (39) des Sensors (38) ein Signal erzeugen.

6. Vorrichtung gemäss einem der Ansprüche 1 bis 5, **dadurch gekennzeichnet, dass** die Messmittel Dehnungsmesstreifen (18, 20; 40, 42) sind.

7. Vorrichtung gemäss einem der Ansprüche 1 bis 6, **dadurch gekennzeichnet, dass** die Messmittel (18, 20; 40, 42) eine Längenänderung in einer Messrichtung erfassen und jeweils mindestens zwei mit ihren Messrichtungen derart zueinander ausgerichtet sind, dass die Signale der Messmittel additiv oder subtraktiv zu einem Gesamtsignal kombinierbar sind, wobei das Gesamtsignal, das durch die transversale Belastung während einer Bremsung verursachbar ist, grösser ist als dasjenige der einzelnen Messmittel, während das Gesamtsignal, das durch andere transversale Belastungen hervorrufbar ist, ein kleineres Signal als dasjenige eines einzelnen Messmittels ist.

8. Vorrichtung gemäss Anspruch 7, **dadurch gekennzeichnet, dass** die Messrichtungen von zwei Messmitteln in einem Winkel von im wesentlichen 90° zueinander ausgerichtet sind.

9. Sensor zur Verwendung in der Vorrichtung gemäss einem der Ansprüche 1 bis 8, **dadurch gekennzeichnet, dass** er ein Gehäuse (39) umfasst, an dessen Innenfläche Messmittel (40, 42) angeordnet sind und/oder das in seinem Inneren mindestens einen Träger aufweist, der zueinander beabstandete Punkte des Gehäuses verbindet, wobei auf dem Träger mindestens ein Messmittel angeordnet ist, so dass von aussen aufgeprägte ovalisierende Verformungen des Gehäuses direkt oder über dadurch verursachte Verformungen des Trägers durch die Messmittel messbar sind.

10. Sensor (38) gemäss Anspruch 9, **dadurch gekennzeichnet, dass** die Messmittel (40, 42) derart angeordnet sind, dass Änderungen der Krümmung des Gehäuses (39) des Sensors (38) erfassbar sind.

11. Sensor (38) gemäss Anspruch 10, **dadurch gekennzeichnet, dass** die Messmittel (40, 42) Dehnungsmessstreifen sind.

12. Sensor (38) gemäss einem der Ansprüche 9 bis 11, **dadurch gekennzeichnet, dass** der Träger sich im wesentlichen längs wenigstens eines Durchmessers des Gehäuses (39) erstreckt.

13. Sensor (38) gemäss einem der Ansprüche 9 bis 12, **dadurch gekennzeichnet, dass** mindestens ein erster und ein zweiter Steg vorhanden sind, die sich im wesentlichen senkrecht zueinander radial erstrecken, so dass eine Messung einer radialen Verformung mit geringerer Abhängigkeit von der angularen Orientierung und/oder eine Trennung verschiedener Typen von Verformungen möglich ist.

14. Sensor gemäss einem der Ansprüche 9 bis 13, **dadurch gekennzeichnet, dass** an seiner Aussenseite Erhebungen (40) vorhanden sind, so dass der Sensor in einen Hohlraum eines stabförmiges Teil (16) unter Anliegen im wesentlichen ausschliesslich der Erhebungen an die Innenwand einsetzbar ist.

15. Sensor (38) gemäss einem der Ansprüche 9 bis 14, **dadurch gekennzeichnet, dass** am Sensor ein Orientierungsmittel vorhanden ist, das in Wirkverbindung mit einem stabförmigen Teil (16) bringbar ist, so dass der Sensor durch die Wirkverbindung in einer Ausrichtung am stabförmigen Teil anbringbar ist, in der der Sensor seine ungefähr höchste Empfindlichkeit für die Verformung des stabförmigen Teils durch eine transversale Belastung aufweist.

16. Verwendung der Vorrichtung gemäss einem der Ansprüche 1 bis 8 oder des Sensors gemäss einem der Ansprüche 9 bis 15 an einem Flugzeug.

## Claims

1. Device for measuring the brake torque in a vehicle undercarriage (1) in which the brake torque is transmitted to the vehicle undercarriage by a bar-shaped member (16), the bar-shaped member being loaded transversely by the brake torque, and measuring means (18, 20; 40, 42) being provided which are in operative mechanical connection with the bar-shaped member, which measuring means allow a measurement of the strain or contraction of the bar-shaped member that is caused by the transverse load, **characterised in that** the measuring means (18, 20; 40, 42) are located in an enclosure (39) of a sensor (38) that extends into a cavity of the bar-shaped member (16), at least a part of the enclosure being in operative mechanical connection with the bar-shaped member (16) and the measuring means being in operative mechanical connection with that part of the enclosure such that a deformation of the bar-shaped member is transmittable via that enclosure part to the measuring means, the enclosure (39) being sufficiently bendable to follow the deformation of the bar-shaped member.

2. Device according to claim 1, **characterised in that** the bar-shaped member (16) is a hollow bolt that connects a torque takeout arm (12) which serves for transmitting the brake torque from the brake (6) to the undercarriage, to the undercarriage of the vehicle or to the stationary part (14) of the brake assembly.

3. Device according to claim 1 or 2, **characterised in that** the measuring means (18, 20) are arranged in pairs, the two parts of each pair being arranged such that they measure variations of the surface that are oriented in opposite directions.

4. Device according to one of claims 1 to 3, **characterised in that** the measuring means (18, 20; 40, 42) are arranged to detect an ovalisation of the bar-shaped member (16).

5. Device according to one of claims 1 to 4, **characterised in that** the measuring means (18, 20; 40, 42) are arranged so as to generate a signal upon variation of the curvature of the enclosure (39) of the sensor (38).

6. Device according to one of claims 1 to 5, **characterised in that** the measuring means are strain gauges (18, 20; 40, 42).

7. Device according to one of claims 1 to 6, **characterised in that** the measuring means (18, 20; 40, 42) detect length variation in a measuring direction and at least two of them at a time are aligned relative to one another with their measuring directions such that the signals of the measuring means are additively or subtractively combinable into respective total signals, the total signal that may result from the transverse load during a brake application being greater than that of the individual measuring means while the total signal that may result from other transverse loads is a smaller signal than that of an individual measuring means.

8. Device according to claim 7, **characterised in that** the measuring directions of two measuring means are arranged at an angle of essentially 90°.

9. Sensor for use in the device according to one of claims 1 to 8, **characterised in that** it comprises an enclosure (39) on whose internal surface measuring means (40, 42) are arranged and/or which is internally provided with at least one support that connects points of the enclosure that are spaced apart, at least one measuring means being arranged on the support such that ovalising deformations imparted to the enclosure from the exterior are measurable by the measuring means directly or through resulting deformations of the support.

10. Sensor (38) according to claim 9, **characterised in that** the measuring means (40, 42) are arranged such that variations of the curvature of the enclosure (39) of the sensor (38) are detectable.

11. Sensor (38) according to claim 10, **characterised in that** the measuring means (40, 42) are strain gauges.

12. Sensor (38) according to one of claims 9 to 11, **characterised in that** the support essentially extends along at least one diameter of the enclosure (39).

13. Sensor (38) according to one of claims 9 to 12, **characterised in that** at least a first and a second partition wall are provided which extend radially and essentially perpendicularly to each other such that a measurement of a radial deformation that is less dependent upon the angular orientation, and/or a distinction between different types of deformations is/are possible.

14. Sensor according to claims 9 to 13, **characterised in that** it is provided on its outside with projections (40) such that the sensor is insertable into a cavity of a bar-shaped member (16) while essentially only the projections contact the inner side thereof.

15. Sensor (38) according to one of claims 9 to 14, **characterised in that** the sensor is provided with an orientation means that is operatively connectable to a bar-shaped member (16) such that by the operative connection, the sensor is attachable to the bar-shaped member in an alignment in which the sensor approximately has its highest sensitivity to the deformation of the bar-shaped member by a transverse load.

16. Use of the device according to one of claims 1 to 8 or of the sensor according to one of claims 9 to 15 on an aircraft.

## Revendications

1. Dispositif de mesure de la force de freinage dans le train de roulement (1) d'un véhicule où la force de freinage est transmise au train de roulement du véhicule par un élément en forme de tige (16), ledit élément en forme de tige étant chargé transversalement par la force de freinage, et des moyens de mesure (18, 20; 40, 42) étant pourvus qui sont en liaison mécanique active avec l'élément en forme de tige, lesquels moyens de mesure permettent de mesurer l'allongement ou la contraction de l'élément en forme de tige occasionnés par la charge transversale, **caractérisé en ce que** les moyens de mesure (18, 20; 40, 42) sont logés dans le boîtier (39) d'un capteur (38) qui s'étend dans l'intérieur d'une cavité de l'élément en forme de tige (16), au moins une partie du boîtier étant en liaison mécanique active avec l'élément en forme de tige (16) et les moyens de mesure étant en liaison mécanique active avec cette partie du boîtier, de manière qu'une déformation de l'élément en forme de tige est transmissible par ladite partie du boîtier aux moyens de mesure, le boîtier (39) étant suffisamment pliable pour pouvoir suivre la déformation de l'élément en forme de tige (16).

2. Dispositif selon la revendication 1, **caractérisé en ce que** l'élément en forme de tige (16) est un axe creux qui relie au train de roulement du véhicule ou à la partie stationnaire (14) du dispositif de freinage une barre d'absorption de force (12) qui sert à transmettre la force de freinage du frein (6) au train de roulement (1).

3. Dispositif selon la revendication 1 ou 2, **caractérisé en ce que** les moyens de mesure (18, 20) sont disposés par paires, les deux éléments d'une même paire étant disposés de manière à mesurer les variations de la surface en directions opposés.

4. Dispositif selon l'une des revendications 1 à 3, **caractérisé en ce que** les moyens de mesure (18, 20; 40, 42) sont agencés de manière à détecter une ovalisation de l'élément en forme de tige (16).

5. Dispositif selon l'une des revendications 1 à 4, **caractérisé en ce que** les moyens de mesure (18, 20; 40, 42) sont agencés de manière à générer un signal en cas de variation de la courbure du boîtier (39) du capteur (38).

6. Dispositif selon l'une des revendications 1 à 5, **caractérisé en ce que** les moyens de mesure sont des jauges de déformation (18, 20; 40, 42).

7. Dispositif selon l'une des revendications 1 à 6, **caractérisé en ce que** les moyens de mesure (18, 20; 40, 42) détectent une variation de longueur dans une direction de mesure et qu'au moins deux d'entre eux et leurs directions de mesure sont orientés les uns par rapport aux autres de telle manière que les signaux des moyens de mesure peuvent être combinés par addition ou soustraction pour former un signal global, le signal global qui peut être occasionné par la charge transversale durant un freinage étant supérieur à celui des moyens de mesure individuels, alors que le signal global qui peut être occasionné par d'autres charges transversales est un signal inférieur à celui d'un moyen de mesure individuel.

8. Dispositif selon la revendication 7, **caractérisé en ce que** les directions de mesure de deux moyens de mesure sont orientées les unes par rapport aux autres selon un angle de 90° essentiellement.

9. Capteur pour utilisation dans le dispositif selon l'une des revendications 1 à 8, **caractérisé en ce qu'**il comporte un boîtier (39) sur la surface intérieure duquel sont agencés des moyens de mesure (40, 42) et/ou qui comprend au moins un support dans son intérieur qui relie des points espacés du boîtier, au moins un moyen de mesure étant agencé sur le support, de sorte que les déformations ovalisantes transmises au boîtier depuis l'extérieur ou les déformations du support occasionnées par ces dernières peuvent être mesurées par les moyens de mesure.

10. Capteur (38) selon la revendication 9, **caractérisé en ce que** les moyens de mesure (40, 42) sont agencés de manière à pouvoir détecter les variations de courbure du boîtier (39) du capteur (38).

11. Capteur (38) selon la revendication 10, caractérisé en ce les moyens de mesure (40, 42) sont des jauges de déformation.

12. Capteur (38) selon l'une des revendications 9 à 11, **caractérisé en ce que** le support s'étend essentiellement le long d'au moins un diamètre du boîtier (39).

13. Capteur (38) selon l'une des revendications 9 à 12, **caractérisé en ce qu'**au moins une première et une deuxième traverse sont pourvues qui s'étendent essentiellement perpendiculairement l'une par rapport à l'autre en direction radiale, permettant ainsi de mesurer une déformation radiale avec moindre dépendance de l'orientation angulaire et/ou de distinguer différents types de déformations.

14. Capteur selon l'une des revendications 9 à 13, **caractérisé en ce que** des zones surélevées (40) sont pourvues sur sa face extérieure qui permettent d'insérer le capteur dans la cavité d'un élément en forme de tige (16) de manière à ce que substantiellement seules les zones surélevées reposent contre la paroi intérieure.

15. Capteur (38) selon l'une des revendications 9 à 14, **caractérisé en ce que** le capteur présente un moyen d'orientation qui peut être amené en liaison active avec un élément en forme de tige (16), ladite liaison active permettant de monter le capteur sur l'élément en forme de tige dans une orientation dans laquelle le capteur a la plus haute sensibilité approximativement aux déformations de l'élément en forme de tige par une charge transversale.

16. Utilisation du dispositif selon l'une des revendications 1 à 8 ou du capteur selon l'une des revendications 9 à 15 sur un avion.
